Europäisches Patentamt

European Patent Office

Office européen des brevets

(11) Publication number: **0 364 046**
**A2**

## (12) EUROPEAN PATENT APPLICATION

(21) Application number: 89202554.5

(22) Date of filing: 09.10.89

(51) Int. Cl.⁵: **C07F 9/50 , B01J 31/28 , C08G 67/02**

(30) Priority: 12.10.88 NL 8802505

(43) Date of publication of application:
**18.04.90 Bulletin 90/16**

(84) Designated Contracting States:
**BE CH DE FR GB IT LI NL**

(71) Applicant: SHELL INTERNATIONALE
RESEARCH MAATSCHAPPIJ B.V.
Carel van Bylandtlaan 30
NL-2596 HR Den Haag(NL)

(72) Inventor: Eilenberg, Wolf
Badhuisweg 3
NL-1031 CM Amsterdam(NL)

(74) Representative: Aalbers, Onno et al
P.O. Box 302
NL-2501 CH The Hague(NL)

(54) Preparation of tetraaryldiphosphines.

(57) Tetraaryldiphosphines of the general formula $(R^1)_2P-R-P(R^1)_2$, wherein $R^1$ represents an aryl group carrying at least one alkoxy substituent in a position ortho in respect to the phosphorus atom to which the aryl group is bound and R is a bivalent bridging group containing at least two carbon atoms in the bridge, are prepared by contacting hexaaryl-diphosphonium compounds in the presence of an aprotic diluent with an alkali metal aluminium tetrahydride or with a compound derivable therefrom by replacing one, two or three hydrogen atoms with the same or different groups $-OR^2$, wherein $R^2$ is an alkyl or alkoxyalkyl group.

EP 0 364 046 A2

## PREPARATION OF TETRAARYLDIPHOSPHINES

The invention relates to a process for the preparation of tetraaryldiphosphines which can be suitably used as components in catalyst compositions appropriate for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units -(CO)- on the one hand, and the units -A'- derived from the monomers A used on the other hand, occur in alternating order, can be prepared by using catalyst compositions based upon:

a) a palladium compound,

b) an anion of an acid with a pKa of less than 6, and

c) a tetraaryldiphosphine of the general formula $(R^1)_2P-R-P(R^1)_2$, wherein $R^1$ represents an aryl group carrying at least one alkoxy substituent in a position ortho in respect to the phosphorus atom to which the aryl group is bound and R is a bivalent bridging group containing at least two carbon atoms in the bridge.

Thus far, the diphosphines which are used as components c) in the catalyst compositions were prepared by the reaction in liquid ammonia of an alkali metal M with a triarylphosphine $(R^1)_3P$, followed by the reaction of the alkali metal diarylphosphide $(R^1)_2PM$ thus obtained with a dihalogen compound X-R-X. For instance, 1,3-bis[bis(2-methoxyphenyl)phosphino]propane can be prepared by the reaction in liquid ammonia of tris(2-methoxyphenyl)phosphine with sodium, after which the sodium bis(2-methoxyphenyl)phosphide thus obtained reacts virtually quantitatively with 1,3-dichloropropane. The above-described method of preparing tetraaryldiphosphines has two drawbacks. The first one concerns the fact that the splitting reaction of the triarylphosphine with an alkali metal in liquid ammonia is very susceptible to the presence of moisture. Mere traces of water are sufficient to bring about a dramatic fall in the alkali metal diarylphosphide yield. Although it is reasonably simple to exclude traces of moisture on a laboratory scale, the moisture-free execution of the splitting reaction on a technical scale will involve large investments. This makes the above-described method rather less suitable for preparing the tetraaryldiphosphines on a technical scale. The second drawback concerns the fact that tetraaryldiphosphines whose aryl groups, in addition to an alkoxy substituent in the ortho position, also have an alkoxy substituent in the para position in respect to the phosphorus atom to which they are bound, cannot be prepared in the way described hereinbefore. It was found, for instance, that contacting tris(2,4-dimethoxyphenyl)phosphine with sodium in liquid ammonia, does not lead to the formation of the desired sodium bis(2,4-dimethoxyphenyl)phosphide. This means a serious constraint on the applicability of the above-described method of preparing the catalyst components indicated as components c), since it has been found that not only tetraaryldiphosphines whose aryl groups bear a single alkoxy substituent in the ortho position in respect to the phosphorus atom to which they are bound but also tetraaryldiphosphines whose aryl groups in addition bear an alkoxy substituent in the para position in respect to the phosphorus atom to which they are bound are excellently suited to be used as component c) in the catalyst compositions.

The Applicant has done extensive research into the preparation of the desired tetraaryldiphosphines of the general formula $(R^1)_2P-R-P(R^1)_2$ through reduction of the corresponding hexaaryldiphosphonium compounds of the general formula $[(R^1)_3\overset{+}{P}-R-\overset{+}{P}(R^1)][X^-]_2$. The latter compounds can be prepared in a simple way by the reaction of a triaryl phosphine $(R^1)_3P$ with a dihalogen compound X-R-X. For instance, 1,3-bis[tris(2-methoxyphenyl)phosphino]propane dibromide and 1,3-bis[tris(2,4-dimethoxyphenyl)phosphino]propane dibromide can be prepared in virtually quantitative yields by reacting tris(2-methoxyphenyl)phosphine and tris(2,4-dimethoxyphenyl)phosphine, respectively, with 1,3-dibromopropane.

A variety of reducing agents were involved in the research. Initially, the results of the investigation into reduction were disappointing. Among the reducing agents that were used are: lithium in tetrahydrofuran, lithium in tert.butanol, sodium in ethanol, zinc in acetic acid, sodium hydride in tetrahydrofuran, lithium hydride in tetrahydrofuran and sodium boron tetrahydride in ethanol. When attempts were made to convert 1,3-bis[tris(2-methoxyphenyl)phosphino]propane dibromide into the desired 1,3-bis[bis(2-methoxyphenyl)phosphino]propane by means of these reducing agents, no conversion was observed. When lithium in 1,2-diaminoethane was used as reducing agent for the afore-mentioned conversion, about 50% of the dibromide was converted into the tris(2-methoxyphenyl)phosphine which had been used as a starting material for preparing the dibromide, whilst only traces of the desired diphosphine were formed. Employing sodium in ammonia as reducing agent for the above conversion resulted substantially in the formation of 1,3-bis(2-methoxyphenylphosphino)propane. Neither did attempts at achieving the desired objective by means of electrochemical reduction at a mercury cathode proceed very satisfactorily. Though the 1,3-bis[tris(2-methoxyphenyl)phosphino]propane dibromide was partially converted into the desired diphosphine, the reaction product contained a number of side products, notably for instance tris(2-methoxyphenyl)phosphine and bis(2-methoxyphenyl),n-propylphosphine. It is extremely difficult to isolate the desired diphosphine from this complex reaction product.

Further research done by the Applicant into this subject has now revealed that tetraaryldiphosphines of the general formula $(R^1)_2P-R-P-(R^1)_2$ can be prepared virtually quantitatively from the corresponding hexaaryldiphosphonium compounds by contacting the latter compounds in the presence of an aprotic diluent with an alkali metal aluminium tetrahydride or with a compound which may be considered as derived therefrom by replacing one, two or three of its hydrogen atoms with the same or different groups $-OR^2$ wherein $R^2$ is an alkyl group or an alkoxyalkyl group. This virtually quantitative conversion applies not only to hexaaryldiphosphonium compounds whose aryl groups contain a single alkoxy substituent in the ortho position in respect to the phosphorus atom to which they are bound, but also to hexaaryldiphosphonium compounds whose aryl groups in addition contain an alkoxy substituent in the para position in respect to the phosphorus atom to which they are bound. This is surprising in view of the fact that if 1,3-bis[tris(4-methoxyphenyl)-phosphino]propane dibromide (i.e. a diphosphonium compound whose aryl groups contain no alkoxy substituent in the ortho position in respect to the phosphorus atom to which they are bound) is subjected to the reduction with lithium aluminium tetrahydride, about half of the diphosphonium compound is converted into tris(4-methoxyphenyl)phosphine. Apparently, also in the case of the diphosphonium compounds whose aryl groups contain an alkoxy substituent para in respect to the phosphorus atom to which they are bound, the presence in the aryl groups of an (extra) alkoxy substituent in the ortho position in respect to the phosphorus atom to which they are bound is sufficient to effect virtually quantitative conversion into the desired diphosphine.

The present patent application therefore relates to a process for the preparation of tetraaryl-diphosphines, in which process tetraaryl-diphosphines of the general formula $(R^1)_2P-R-P-(R^1)_2$, wherein $R^1$ represents an aryl group carrying at least one alkoxy substituent in a position ortho in respect to the phosphorus atom to which the aryl group is bound and R is a bivalent bridging group containing at least two carbon atoms in the bridge, are prepared by contacting hexaaryldiphosphonium compounds of the general formula $[(R^1)_3\overset{+}{P}-R-\overset{+}{P}(R^1)_3][X^-]_2$, wherein X is a halogen atom, in the presence of an aprotic diluent with an alkali metal aluminium tetrahydride, or with a compound which may be considered as derived therefrom by replacing one, two or three of its hydrogen atoms with the same or different groups $-OR^2$ wherein $R^2$ is an alkyl group or an alkoxyalkyl group.

Further, the present patent application relates to the use of the tetraaryldiphosphines thus prepared as components in catalyst compositions, together with the components a) and b) mentioned hereinbefore. Finally, the patent application relates to the use of these catalyst compositions in the preparation of polymers of carbon monoxide with one or more olefinically unsaturated compounds.

In the process of the invention, preference is given to a hexaaryldiphosphonium compound in which the aryl groups are substituted phenyl groups in which either the substituent is a single alkoxy group in a position ortho in respect to the phosphorus atom to which the phenyl group is bound or the substituents are two alkoxy groups of which one is in the ortho position and the other in the para position in respect to the phosphorus atom to which the phenyl group is bound. Hexaaryldiphosphonium compounds in which the alkoxy groups are methoxy groups are used by preference.

Both polar and non-polar diluents are eligible aprotic diluents. Examples of suitable aprotic polar diluents are tetrahydrofuran, the dimethyl ether of ethylene glycol and the dimethyl ether of diethylene glycol. Examples of suitable aprotic non-polar diluents are benzene and toluene. The present conversion is preferably carried out at an elevated temperature, for instance by refluxing the mixture to be reacted for some time.

In the process of the invention, the preferred reducing agent is a compound which may be regarded as having been derived from an alkali metal aluminium tetrahydride by replacing two of its hydrogen atoms with two identical groups $-OR^2$ wherein $R^2$ is an alkoxyalkyl group. Special preference is given to such compounds in which $R^2$ is a 2-methoxyethyl group. The mininum quantity of reducing agent to be employed depends on the number of hydrogen atoms present. per mol of hexaaryldiphosphonium compound, such a quantity of reducing agent is preferably employed as to contain at least 2 gram atom and in particular at least 4 gram atom of hydrogen. Thus, when an alkali metal aluminium tetrahydride is used as the reducing agent, the amount used per mol of hexaaryldiphosphonium compound to be reduced should preferably be at least 0.5 mol and in particular at least 1 mol, whilst when an alkali metal bis(alkoxyalkyloxy)aluminium dihydride is used as the reducing agent, this quantity preferably is at least 1 mol and in particular at least 2 mol.

As stated hereinbefore, the present patent application also relates to catalyst compositions based upon:

a) a palladium compound,

b) an anion of an acid with a pKa of less than 6, and

c) a tetraaryldiphosphine prepared according to the invention.

The palladium compound employed in the catalyst compositions as component a) is preferably a palladium salt of a carboxylic acid and in particular palladium acetate. The component b) present in the catalyst composition is preferably an anion of an acid with a pKa of less than 2 and in particular an anion of trifluoro acetic acid. In the catalyst compositions, component b) is preferably present in a quantity of from 0.5 to 50 and in particular of from 1 to 25 mol per mol of palladium. Component b) may be incorporated in the catalyst compositions in the form of an acid and/or in the form of a salt. When a salt is used as component b), peference is given to a cupric salt. In the tetraaryl diphosphines prepared according to the invention that are used in the catalyst compositions as components c), bridging group R preferably contains three atoms in the bridge, at least two of which are carbon atoms. Examples of suitable bridging groups are the -CH$_2$-CH$_2$-CH$_2$ group, the -CH$_2$-C(CH$_3$)$_2$-CH$_2$ group and the -CH$_2$-Si(CH$_3$)$_2$-CH$_2$ group. Preferably, the tetraaryldiphosphines are used in the catalyst compositions in a quantity of from 0.5 to 2 and in particular of from 0.75 to 1.5 mol per mol of palladium.

In order to enhance the activity of the catalyst compositions, a 1,4-quinone may be incorporated as a component d). For this purpose, 1,4-benzoquinone and 1,4-naphthoquinone are very suitable. The quantity of 1,4-quinone used is preferably 5 to 5000 and in particular 10 to 1000 mol per mol of palladium.

Eligible olefinically unsaturated compounds that can be polymerized with carbon monoxide with the aid of the catalyst compositions are both compounds consisting exclusively of carbon and hydrogen and compounds which, in addition to carbon and hydrogen, contain one or more heteroatoms. The catalyst compositions are preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1. The catalyst compositions are particularly suitable for application in the preparation of copolymers of carbon monoxide with ethene and in the preparation of terpolymers of carbon monoxide with ethene and another alpha-olefin, propene in particular.

As a rule, polymerization is carried out by contacting the monomers at an elevated temperature and pressure with a solution of the catalyst composition in a diluent in which the polymers are insoluble or virtually insoluble. During polymerization, the polymers are obtained in the form of a suspension in the diluent. Preferred diluents are lower aliphatic alcohols, such as methanol, since in these diluents, the catalyst compositions have been found to show their highest polymerization rates. If desired, polymerization may also be carried out in the gaseous phase.

Per mol of olefinically unsaturated compound to be polymerized, such a quantity of catalyst composition is preferably used as to contain 10$^{-7}$ to 10$^{-3}$ and in particular 10$^{-6}$ to 10$^{-4}$ mol of palladium.

The polymer preparation is preferably carried out at a temperature of from 40 to 120°C and a pressure of from 20 to 150 bar, in particular at a temperature of from 50 and 100°C and a pressure of from 30 to 100 bar. The molar ratio of the olefinically unsaturated compounds relative to carbon monoxide in the mixture to be polymerized preferably lies in a range of from 10:1 to 1:5 and in particular in a range of from 5:1 to 1:2. Polymerization may be carried out batch-wise or continuously.

The invention will now be illustrated with the aid of the following examples of which Examples 2-4 are examples in accordance with the invention. Example 1 falls outside the scope of the invention and has been included for comparison.

## Example 1

The electrochemical reduction of 1,3-bis[tris(2-methoxyphenyl)phosphino]propane dibromide was effected in a diaphragm cell comprising a 40-ml beaker fitted with a mercury cathode (7 cm$^2$), and a platinum anode (2 cm$^2$) which was separated from the cathode by a diaphragm of sintered glass. The electrolytic cell thus constructed was equipped with a magnetic stirrer in order to mix the contents of the cathode compartment. During electrolysis, the current density was kept constant, at 7-8 mA/cm$^2$. The potential difference between the two electrodes was about 18V. Electrolysis was effected at 20°C.

In the cathode compartment of the above described diaphragm cell which contained 30 ml of water as electrolyte was placed 300 mg of 1,3-bis-[tris(2-methoxyphenyl)phosphino]propane dibromide. After the charge had reached a value of 5-6 Faraday/mol, the contents of the cathode compartment were extracted with dichloromethane.

Analysis of the extract showed that about 50 %w of the 1,3 bis[tris(2-methoxyphenyl)phosphino]-propane dibromide had been converted into 1,3-bis[bis(2-methoxyphenyl)phosphino]propane and that the remainder had been converted into side products, namely about 21 %w into tris(2-methoxyphenyl)phosphine and about 17 %w into bis(2-methoxyphenyl),n-propylphosphine.

Example 2

1,3-bis[bis(2-methoxyphenyl)phosphino]-propane was prepared as follows. To a suspension of 300 mg of 1,3-bis[tris(2-methoxyphenyl)-phosphino]propane dibromide in 50 ml of tetrahydrofuran, 49 mg of lithium aluminium tetrahydride was added in portions. Then, the mixture was refluxed with stirring for three hours in a nitrogen atmosphere. Excess lithium aluminium tetrahydride was decomposed by the addition of 20 ml of a 1:1 methanol/water mixture. The reaction mixture was extracted three times, each time with 50 ml of dichloromethane. Analysis of the extract showed that more than 95 %w of the 1,3-bis[tris(2-methoxyphenyl)phosphino]propane dibromide had been converted into 1,3-bis[bis(2-methoxyphenyl)-phosphino]propane.

Example 3

1,3-bis[bis(2-methoxyphenyl)phosphino]-propane was prepared as follows. To a suspension of 300 mg of 1,3-bis[tris(2-methoxyphenyl)-phosphino]propane dibromide in 50 ml of toluene, 3 ml of a 70 %w solution of sodium bis(2-methoxyethyloxy)aluminium dihydride in toluene was added dropwise. Then, the mixture was refluxed with stirring for three hours in a nitrogen atmosphere. Excess sodium bis(2-methoxyethyloxy)aluminium dihydride was decomposed by the addition of 20 ml of a 1:1 methanol/water mixture. The reaction mixture was extracted three times, each time with 50 ml of toluene. Analysis of the extract showed that more than 95 %w of the 1,3-bis[tris(2-methoxyphenyl)phosphino]propane dibromide had been converted into 1,3-bis[bis(2-methoxyphenyl)-phosphino]propane.

Example 4

1,3-bis[bis(2,4-dimethoxyphenyl)phosphino]-propane was prepared as follows. To a suspension of 200 mg of 1,3-bis[tris(2,4-dimethoxyphenyl)-phosphino]propane dibromide in 40 ml of toluene, 3 ml of a 70 %w solution of sodium bis(2-methox- yethyloxy)aluminium dihydride in toluene was added dropwise. Then, the mixture was refluxed with stirring for three hours in a nitrogen atmosphere. Excess sodium bis(2-methoxyethyloxy)aluminium dihydride was decomposed by the addition of 20 ml of a 1:1 methanol/water mixture. The reaction mixture was extracted three times, each time with 50 ml of toluene. Analysis of the extract showed that more than 90 %w of the 1,3-bis[tris(2,4-dimethoxyphenyl)phosphino]propane dibromide had been converted into 1,3-bis[bis(2,4-dimethoxyphenyl)phosphino]propane.

**Claims**

1. Process for the preparation of tetraaryl-diphosphines, characterized in that tetraaryl-diphosphines of the general formula $(R^1)_2P$-R-P-$(R^1)_2$, wherein $R^1$ represents an aryl group carrying at least one alkoxy substituent in a position ortho in respect to the phosphorus atom to which the aryl group is bound and R is a bivalent bridging group containing at least two carbon atoms in the bridge, are prepared by contacting hexaaryldiphosphonium compounds of the general formula $[(R^1)_3\overset{+}{P}$-R-$\overset{+}{P}(R^1)_3][X^-]_2$, wherein X is a halogen atom, in the presence of an aprotic diluent with an alkali metal aluminium tetrahydride or with a compound which may be considered as derived therefrom by replacing one, two or three of its hydrogen atoms with the same or different groups -$OR^2$ wherein $R^2$ is an alkyl group or an alkoxyalkyl group.

2. A process as claimed in claim 1, characterized in that the aryl groups present in the hexaaryldiphosphonium compounds are substituted phenyl groups in which either the substituent is a single alkoxy group in a position ortho in respect to the phosphorus atom to which the phenyl group is bound or the substituents are two alkoxy groups of which one is in the ortho position and the other in the para position in respect to the phosphorus atom to which the phenyl group is bound.

3. A process as claimed in claim 1 or 2, characterized in that the alkoxy groups present in the hexaaryldiphosphonium compounds are methoxy groups.

4. A process as claimed in one or more of claims 1-3, characterized in that the reducing agent employed is a compound which can be regarded as having been derived from an alkali metal aluminium tetrahydride by replacing two of its hydrogen atoms with two identical groups -$OR^2$ wherein $R^2$ is an alkoxyalkyl group.

5. A process as claimed in claim 4, characterized in that $R^2$ is a 2-methoxyethyl group.

6. A process as claimed in one or more of claims 1-5, characterized in that such a quantity of reducing agent is used per mol of hexaaryldiphosphonium compound as to contain at least 2 gram atom of hydrogen.

7. Catalyst compositions, characterized in that they are based upon

a) a palladium compound,

b) an anion of an acid with a pKa of less than 6, and

c) a tetraaryldiphosphine prepared as claimed in any of claims 1 to 6.

8. Catalyst compositions as claimed in claim 7, characterized in that they are based upon

a) a palladium salt of a carboxylic acid, such as palladium acetate,

b) an anion of an acid with a pKa of less than 2, such as the anion of trifluoro acetic acid, in a quantity of from 1 to 25 mol per mol of palladium,

c) a tetraaryldiphosphine, in which bridging group R contains three atoms in the bridge at least two of which are carbon atoms, in a quantity of from 0.75 to 1.5 mol of tetraaryl diphosphine per mol of palladium, and

d) if desired, a 1,4-quinone, such as 1,4-benzoquinone or 1,4-naphthoquinone, in a quantity of from 10 to 1000 mol per mol of palladium.

9. A process for the preparation of polymers, characterized in that polymers of carbon monoxide with one or more olefinically unsaturated compounds are prepared by contacting the monomers at an elevated temperature and pressure with a catalyst composition as claimed in claim 7 or 8.

10. A process as claimed in claim 9, characterized in that it is carried out by contacting the monomers with a solution of the catalyst composition in a diluent in which the polymers are insoluble or virtually insoluble, at a temperature of from 50 to 100 $^\circ$C, a pressure of from 30 to 100 bar and a molar ratio of the olefinically unsaturated compounds relative to carbon monoxide in the mixture to be polymerized in the range of from 5:1 to 1:2, and using such a quantity of catalyst composition as to contain $10^{-6}$ to $10^{-4}$ mol of palladium per mol of olefinically unsaturated compound to be polymerized.